# EUROPEAN PATENT SPECIFICATION

(11) **EP 2 949 691 B1**
(45) Date of publication and mention of the grant of the patent: **15.12.2021**
(21) Application number: 14764723.4
(22) Date of filing: 13.03.2014
(51) Int. Cl.: C08J 7/04, C08J 5/18, B29D 7/01, C09D 4/02, C09D 175/14, C09D 175/04, C08G 18/48, C08G 18/75, C08G 18/40, C08G 18/24, C08K 3/36, C08G 18/80, C08G 18/10, C09D 175/16

(54) **METHOD FOR MANUFACTURING PLASTIC FILM**
VERFAHREN ZUR HERSTELLUNG EINES KUNSTSTOFFFILMS
PROCÉDÉ DE FABRICATION DE FILM PLASTIQUE

(30) Priority: 15.03.2013 KR 20130028143; 12.03.2014 KR 20140029034
(43) Date of publication of application: 02.12.2015
(73) Proprietor: LG Chem, Ltd., Seoul 150-721 (KR)
(72) Inventor: KANG, Joon Koo, Daejeon 305-738 (KR); CHANG, Yeong Rae, Daejeon 305-738 (KR); KIM, Heon, Daejeon 305-738 (KR); LEE, Han Na, Daejeon 305-738 (KR)
(74) Representative: Goddar, Heinz J.
(86) International application number: PCT/KR2014/002126
(87) International publication number: WO 2014/142582

(56) References cited:
- JP-A- H03 182 350
- JP-A- 2000 112 379
- JP-A- 2000 112 379
- KR-A- 20060 114 162
- KR-A- 20070 096 328
- KR-A- 20070 096 329
- KR-A- 20070 096 329
- KR-A- 20100 026 014
- KR-A- 20120 136 597
- KR-B1- 101 058 395
- US-A1- 2007 178 297
- None

## Description

### BACKGROUND OF THE INVENTION

### (a) Field of the Invention

The present invention relates to a method for preparing a plastic film. More particularly, the present invention relates to a method for preparing a plastic film of high hardness and excellent processability.

This application claims the benefit of Korean Patent Application No. 10-2013-0028143 filed on March 15, 2013, and Korean Patent Application No. 10-2014-0029034, filed on March 12, 2014,

### (b) Description of the Related Art

With the advance of mobile appliances such as smart phones, tablet PCs and the like, further lightness and thinness have recently been required for substrates for displays. Display windows or front panels of such mobile appliances are generally made of glass or reinforced glass both of which have excellent mechanical properties. However, glass suffers from the disadvantage of being heavy and being easily broken by an external impact.

As an alternative to glass, plastic resins have been studied. Their light weight and resistance to impact are consistent with the trend of pursuing lighter and thinner mobile appliances. Particularly, a film with high hardness and wear resistance is required. In this regard, it is proposed to utilize a structure in which the substrate is coated with a coating layer.

First of all, increasing the thickness of the coating layer is considered as an approach to improving the surface hardness thereof. In fact, the coating layer should be of a minimal thickness to ensure the surface hardness of the coating layer. As the coating layer increases in thickness, the surface hardness thereof may become higher. However, a thicker coating layer, although increasing the surface hardness, is more prone to setting shrinkage which leads to wrinkling or curling with the concomitant production of cracks or exfoliations, and thus thick coating layers are difficult to employ in practice.

Recently, several methods have been proposed for conferring a high hardness on plastic films, without the problems of cracking and setting shrinkage-induced curling.

Korean Patent Application Publication No. 2010-0041992 discloses a plastic film composition, free of monomers, comprising a binder resin based on ultraviolet-curable polyurethane acrylate oligomers. However, this plastic film has a pencil hardness of approximately 3H, and thus the strength thereof is not sufficient to be a substitute for glass panels for displays.

### SUMMARY OF THE INVENTION

Accordingly, the present invention has been made keeping in mind the above problems occurring in the prior art, and is intended to provide a method for preparing a plastic film which exhibits high hardness and processability without the problems of curling, warping and cracking.

In accordance with an aspect thereof, the present invention provides a method for preparing a plastic film, comprising applying a coating composition containing a tri- to hexafunctional acrylate-based monomer, a thermosetting prepolymer composition, an inorganic fine particle, and a photoinitiator to at least one side of a support substrate; and curing the coating composition applied to the support substrate with light and heat to form a coating layer.

According to the present invention, a plastic film which exhibits high hardness, impact resistance, scratch resistance and transparency and which is superior in terms of processability sufficient to be less prone to curling or cracking can be fabricated. The plastic film can be usefully applied to front panels and displays of mobile appliances, and various displays.

### DETAILED DESCRIPTION OF THE EMBODIMENTS

The method for preparing a plastic film in accordance with the present invention comprise applying a coating composition containing a tri- to hexafunctional acrylate-based monomer, a thermosetting prepolymer composition, an inorganic fine particle, and a photoinitiator to at least one side of a support substrate; and curing the coating composition applied to the support substrate with light and heat to form a coating layer.

As used herein, the words "first" and "second" are employed only to describe various elements, and are intended to discriminate one element from another.

As used herein and in the appended claims, the singular forms "a", "an", and "the" include plural references unless the context clearly dictates otherwise. Unless the context clearly requires otherwise, throughout the description and the claims, the words "comprise," "comprising," and the like are to be construed in an inclusive sense as opposed to an exclusive or exhaustive sense, that is to say, in the sense of "including, but not limited to."

Additionally, the word "on" or "above," as used in the context of formation or construction of one element, means pertaining to the direct formation or construction of one element on another element directly or the additional formation or construction of one element between layers or on a subject or substrate.

The following detailed descriptions of embodiments of the invention are not intended to be exhaustive or to limit the invention to the precise form disclosed below.

Below, a detailed description will be given of a method for preparing a plastic film in accordance with the present invention.

The method for preparing a plastic film according to the present invention starts with applying a coating composition containing a tri- to hexafunctional acrylate-based monomer, a thermosetting prepolymer composition, an inorganic fine particle, and a photoinitiator to at least one side of the support substrate.

In the preparing method of the present invention, any typical plastic resin, whether capable of being stretched or not, may be used for the support substrate to at least one side of which the coating composition is applied, without limitations imposed thereon, so long as it is transparent. According to an embodiment of the present invention, the substrate may be made of, for example, a polyester such as polyethyleneterephtalate (PET), a polyethylene such as ethylene vinyl acetate (EVA), cyclic olefin polymer (COP), cyclic olefin copolymer (COC), polyacrylate (PAC), polycarbonate (PC), polyethylene (PE), polymethylmethacrylate (PMMA), polyetheretherketon (PEEK), polyethylenenaphthalate (PEN), polyetherimide (PEI), polyimide (PI), triacetylcellulose (TAC), MMA (methyl methacrylate), or a fluoro-polymer. The support substrate may be a single layer structure, and, if necessary, may be a multilayer structure including two or more layers composed of the same or different materials, but is not particularly limited.

According to an embodiment of the present invention, the substrate may be a multilayered substrate made of polyethyleneterephthalate (PET) or co-extruded polymethylmethacrylate (PMMA)/polycarbonate (PC).

Further, according to an embodiment of the present invention, the substrate may include a copolymer of polymethylmethacrylate (PMMA) and polycarbonate (PC).

The substrate may range in thickness from approximately 30 to approximately 1,200 µm, or from approximately 50 to approximately 800 µm, but is not limited thereto.

The coating composition applied on one side of the support substrate comprises a tri- to hexafunctional acrylate-based monomer, a thermosetting prepolymer composition, an inorganic fine particle, and a photoinitiator.

As used herein, the term "acrylate-based" is intended to encompass acrylates, methacrylates, and substituted acrylates or methacrylates.

Examples of the tri to hexafunctional acrylate monomer include, but are not limited to, trimethylolpropane triacrylate (TMPTA), trimethylolpropane ethoxy triacrylate (TMPEOTA), glycerin-propoxylated triacrylate (GPTA), pentaerythritol tetraacrylate (PETA), and dipentaerythritol hexaacrylate (DPHA). These tri- to hexafunctional acrylate monomers may be used alone or in combination.

When irradiated with UV light, the tri- to hexafunctional acrylate monomers may be crosslinked with each other, or with other binder components to form a photocrosslinked copolymer which confers a high hardness on the coating layer thereof.

According to one embodiment of the present invention, the tri- to hexafunctional acrylate-based monomer may be used in an amount of approximately 40 to approximately 80 weight parts, or approximately 50 to approximately 80 weight parts, based on 100 weight parts of the solid component of the coating composition comprising the tri- to hexafunctional acrylate-based monomer, the thermosetting prepolymer composition, the photoinitiator, and the inorganic fine particle (when the thermosetting prepolymer composition is dissolved in a solvent, the solvent is excluded). When used in such amounts, the tri- to hexafunctional acrylate-based monomer can endow the plastic film with good physical properties such as high hardness, impact resistance, scratch resistance, etc.

The coating composition of the present invention comprises a thermosetting prepolymer composition. Herein, the "thermosetting prepolymer composition" means a composition comprising two or more different oligomers or polymers which are able to undergo crosslinking polymerization in the presence of heat, and may be contained as being or being not dissolved in a proper solvent in the coating composition.

In one embodiment of the present invention, the thermosetting prepolymer composition may comprise a polyester-based polyurethane oligomer, a polyol, and a polyisocyanate. In more detail, the thermosetting prepolymer composition may contain a polyester-based polyurethane oligomer in an amount of 10 to 40 wt %, a polyol in an amount of 5 to 30 wt %, and a polyisocyanate in an amount of 50 to 80 wt %, based on the total weight of the solid components thereof.

In one embodiment of the present invention, the polyester-based polyurethane oligomer has a number average molecular weight of approximately 1,000 to approximately 100,000g/mol, a viscosity of approximately 100 to approximately 3,000 cps when dissolved at a concentration of 15 % in cyclohexane, and a Tg of -30 to 40°C. The polyester-based polyurethane with such physical properties may be directly synthesized or may be commercially purchased. Among the commercially available products are ESTANE^{®} 5701 TPU, ESTANE^{®} 5703 TPU, ESTANE^{®} 5707 TPU, ESTANE^{®} 5708 TPU, ESTANE^{®} 5713 TPU, ESTANE^{®} 5714 TPU, ESTANE^{®} 5715 TPU, ESTANE^{®} 5719 TPU, and ESTANE^{®} 5778 TPU, all from Noveon.

In one embodiment of the present invention, the polyol may range in number average molecular weight from approximately 1,000 to 100,000. In addition, the polyol may be selected from the group consisting of, but not limited to, polyethylene glycol polyol, polycarprolactone polyol, polyester polyol, polyether polyol, polyacryl polyol, polycarbonate polyoldiol, and a combination thereof. Preferred examples of the polyol include 1,4-butanediol, diethylene glycol, dipropylene glycol, polyalkylene glycol having an alkyl of 1 to 5 carbons, and polyalkylene ether polyol. The polyalkylene ether polyol may be selected from the group consisting of polytetramethylene ether glycol, poly(oxytetramethylene)ether glycol, poly(oxytetraethylene)ether glycol, poly(oxy-1,2-propylene)ether glycol, poly(oxy-1,2-butylene)ether glycol, and a combination thereof.

In one embodiment of the present invention, the polyisocyanate may have a number average molecular weight of approximately 500 to approximately 50,000 g/mol. No particular limitations are imposed on the kind of the polyisocyanate. Preferred is a polymer polymerized from aliphatic and aromatic isocyanates. Examples of the aliphatic diisocyanate include 1,4-tetramethylene diisocyanate, 1,6-hexamethylene diisocyanate, 1,4-cyclohexyl diisocyanate, isophorone diisocyanate, and α,α-xylene diisocyanate. Examples of the aromatic isocyanate include 4,4'-dimethylmethane diisocyante, 1,3-phenylene diisocyanate and toluene diisocyanate. In addition, a polyisocyanate polymerized from di- or trimers of the diisocyanates may be used.

Generally, the tri- to hexafunctional acrylate-based monomer may cause a setting shrinkage or curl phenomenon in which a substrate is rolled up together with a coating layer due to shrinkage attributable to curing. The thermosetting prepolymer composition can counteract the setting shrinkage or curl phenomenon. The curl phenomenon is a phenomenon in which the edge or the like of a planar film is curvilinearly warped or rolled up when the planar film is spread on a flat plate, and this curl phenomenon occurs when an acrylate-based monomer is contracted in the procedure of photocuring this acrylate-based monomer by ultraviolet irradiation.

For use as a cover plate, a plastic resin film must be improved in surface hardness to a degree high enough to substitute for glass. Increasing the thickness of the coating layer is considered as an approach to improving the surface hardness thereof. In fact, the coating layer should be of a minimal thickness to ensure the surface hardness of the coating layer. As the coating layer increases in thickness, the surface hardness thereof may become higher. However, a thicker coating layer, although increasing the surface hardness, is more prone to setting shrinkage which leads to decreased adhesiveness and increased curling. In this regard, a planarization process may be separately employed. However, the coating layer is likely to crack during planarization. Accordingly, it is difficult to prepare a plastic film which is high enough in hardness to substitute for glass, without a decrease in desirable physical properties.

The presence of the thermosetting prepolymer composition in addition to the photocurable acrylate-based monomer allows the plastic film to maintain high hardness and to have improved processability by preventing photosetting-induced curling and increasing toughness. Hence, desirable physical properties of the plastic film can be reinforced by the thermosetting prepolymer composition.

According to one embodiment of the present invention, the weight ratio of the tri- to hexafunctional acrylate-based monomer to the thermosetting prepolymer composition (when the thermosetting prepolymer composition is in a dissolved form in a solvent, only the solid component is considered with the exclusion of the solvent) ranges from approximately 1:0.1 to approximately 1:1.2. Given the amounts of the tri- to hexafunctional acrylate-based monomer and the thermosetting prepolymer composition within the ranges set forth above, the hard coating film can be formed with good processability while retaining high hardness.

In one embodiment of the present invention, the thermosetting prepolymer composition may be used in an amount of approximately 5 to approximately 50 weight parts, or approximately 10 to approximately 40 weight parts (when the thermosetting prepolymer composition is in a dissolved form in a solvent, only the solid component is considered with the exclusion of the solvent), based on 100 weight parts of the solid component of the composition comprising the tri- to hexafunctional acrylate-based monomer, the thermosetting prepolymer composition, the photoinitiator, and the inorganic fine particle. When used in such amounts, the thermosetting prepolymer composition can endow the plastic film with good physical properties such as high hardness and high processability.

In one embodiment of the present invention, the thermosetting prepolymer composition may further comprise a catalyst for promoting a thermosetting reaction. So long as it is known to promote the condensation of the thermosetting prepolymer composition, any catalyst may be available without limitations thereto. In detail, the catalyst may be at least one selected from the group consisting of dibutyltindilaurate (DBTDL), zinc octoate, iron acetyl acetonate, N,N-dimethyl ethanolamine, and triethylene diamine. These catalysts may be used alone or in combination with different kinds.

According to one embodiment of the present invention, the catalyst may be contained in an amount of approximately 0.01 to approximately 1,000 ppm, or approximately 0.1 to approximately 100 ppm in the thermosetting prepolymer composition. Given the quantity range, the catalyst can perform sufficient thermosetting polymerization, without deteriorating the physical properties of the resulting plastic film.

In the preparing method of plastic films of the present invention, the coating composition comprises a photoinitiator.

According to one embodiment of the present invention, examples of the photoinitiator useful in the present invention include, but are not limited to, 1-hydroxy-cyclohexyl-phenyl ketone, 2-hydroxy-2-methyl-1-phenyl-1-propanone, 2-hydroxy-1-[4-(2-hydroxyethoxy)phenyl]-2-methyl-1-propanone, methylbenzoylformate, α,α-dimethoxy-α-phenylacetophenone, 2-benzoyl-2-(dimethylamino)-1-[4-(4-morpholinyl)phenyl]-1-butanone, 2-methyl-1-[4-(methylthio)phenyl]-2-(4-morpholinyl)-1-propanone diphenyl(2,4,6-trimethylbenzoyl)-phosphine oxide, and bis(2,4,6-trimethylbenzoyl)-phenylphosphine oxide. In addition, it may be commercially available under the trade name of, for example, Irgacure 184, Irgacure 500, Irgacure 651, Irgacure 369, Irgacure 907, Darocur 1173, Darocur MBF, Irgacure 819, Darocur TPO, Irgacure 907, or Esacure KIP 100F. These different photoinitiators may be used alone or in combination.

According to one embodiment of the present invention, the photoinitiator may be used in an amount of approximately 0.2 to approximately 5 weight parts, or approximately 0.5 to approximately 3 weight parts, based on 100 weight parts of a solid component including the tri- to hexafunctional acrylate-based monomer, the thermosetting prepolymer composition, the photoinitiator, and the inorganic fine particle. When used in such amounts, the photoinitiator allows for sufficient crosslinking polymerization, without deteriorating physical properties of the plastic film.

According to one embodiment of the present invention, the coating composition comprises an organic solvent to exert proper fluidity and coatability.

In the preparing method of plastic films of the present invention, the coating composition comprises inorganic fine particles.

In one embodiment of the present invention, the inorganic fine particles may be nano-sized. For example, they may have a diameter of approximately 100 nm or less, or approximately 10 to approximately 100 nm, or approximately 10 to approximately 50 nm. As the inorganic fine particles, for example, silica particles, aluminum oxide particles, titanium oxide particles, or zinc oxide particles may be employed.

The inorganic fine particles can further reinforce the hardness of the plastic film.

According to one embodiment of the present invention, the inorganic fine particle may be used in an amount of approximately 5 to approximately 40 weight parts, or approximately 10 to approximately 40 weight parts, based on 100 weight parts of a solid component including the tri- to hexafunctional acrylate-based monomer, the thermosetting prepolymer composition, the photoinitiator, and the inorganic fine particle. When used in such amounts, the inorganic fine particle can bring approximately an improvement in the hardness of the plastic film.

In the preparing method of plastic films of the present invention, the coating composition comprises an organic solvent to exert proper fluidity and coatability.

In one embodiment of the present invention, the organic solvent may be selected from among alcohol solvents, such as methanol, ethanol, isopropyl alcohol, and butanol; alkoxy alcohol solvents, such as 2-methoxyethanol, 2-ethoxyethanol, and 1-methoxy-2-propanol; ketone solvents, such as acetone, methylethylketone, methylisobutyl ketone, methylpropyl ketone, and cyclohexanone; ethers, such as propylene glycol monopropylether, propyleneglycol monomethyl ether, ethylene glycol monethylether, ethyleneglycol monopropylether, ethyleneglycolmonobutylether, diethyleneglycolmonomethylether, diethylglycolmonoethyl ether, diethylglycolmonopropylether, diethylglycolmonobutylether, diethyleneglycol-2-ethylhexyl ether; aromatic solvents, such as benzene, toluene, and xylene; and a combination thereof.

According to one embodiment, the content of the organic solvent may be variously adjusted to the degree that the physical properties of the coating composition of the present invention are not degraded. The organic solvent may be used in such an amount that the weight ratio of the solid component including the tri- to hexafunctional acrylate-based monomer, the thermosetting prepolymer composition, the photoinitiator, and the inorganic fine particle to the organic solvent ranges from approximately 70 : 30 to approximately 99 : 1.

Meanwhile, in the preparing method of plastic films of the present invention, the coating composition may include a typical additive such as a surfactant, a yellowing inhibitor, a leveling agent, an antifouling agent and the like, in addition to the tri- to hexafunctional acrylate-based monomer, the thermosetting prepolymer composition, the photoinitiator, the inorganic fine particle, and the organic solvent. Here, the content of the additive may be variously adjusted to the degree that the physical properties of the composition of the present invention are not degraded. Its content is not particularly limited, but preferably ranges from approximately 0.1 to approximately 10 weight parts, based on 100 weight parts of the solid component including the tri- to hexafunctional acrylate-based monomer, the thermosetting prepolymer composition, the photoinitiator, the inorganic fine particle, and the organic solvent.

According to an embodiment of the present invention, the coating composition may include a surfactant as an additive. The surfactant may be a mono- or bi-functional fluorine acrylate, a fluorine surfactant, or a silicon surfactant. In this context, the surfactant may be contained in a dispersed or crosslinked form in the tri- to hexafunctional acrylate-based monomers.

Further, a yellowing inhibitor may be used as an additive. The yellowing inhibitor may be a benzophenone compound or a benzotriazole compound.

No particular limitations are imposed on the viscosity of the coating composition when it exhibits suitable fluidity and coatability. For example, the coating composition may have a viscosity of approximately 1,200 cps, or less at 25°C.

Any method that is available in the art can be used in the application of the coating composition without particular limitations. For example, the coating composition may be applied by bar coating, knife coating, roll coating, blade coating, die coating, micro-gravure coating, comma coating, slot die coating, lip coating, solution casting or the like.

After being completely cured, the coating layer has a thickness of approximately 50 µm or higher, for example, approximately 50 to approximately 300 µm, approximately 50 to approximately 200 µm, approximately 50 to approximately 150 µm, or approximately 70 to approximately 150 µm. According to the present invention, a plastic film of high hardness can be prepared without the formation of curls or cracks even when the coating layer is formed to the above thickness.

Next, the coating composition comprising the aforementioned components is cured with heat and light to form a coating layer after it is applied to the support substrate.

For this, after application of the coating composition to the substrate, the solvent is evaporated and the coating composition is dried to planarize the coated surface. This drying step may be carried out at approximately 60 to approximately 90°C.

This photocuring is intended to crosslink the tri- to hexafunctional acrylate-based monomers contained in the coating composition, and is performed by UV irradiation. UV radiation may be emitted at a dose of approximately 20 to approximately 600 mJ/cm², or approximately 50 to approximately 500 mJ/cm². Any light source that is used in the art can be applied to the present invention without particular limitation. For example, a high-pressure mercury lamp, a metal halide lamp, a black light fluorescent lamp or the like may be used. The photocuring may be carried out by irradiating UV light at the dose for approximately 30 sec to approximately 15 min, or for approximately 1 to approximately 10 min.

The thermosetting is designed for the thermosetting prepolymer composition contained in the coating composition. It may be optionally carried out once or more times before and/or after UV irradiation for photocuring. The thermosetting may be achieved by heating at approximately 60 to approximately 140ºC, at approximately 80 to approximately 130ºC, or at approximately 80 to approximately 120ºC for approximately 1 min to approximately 1 hr, or for approximately 2 min to approximately 30 min. For example, when the heating is conducted at less than the lower limit, only insufficient thermosetting is achieved, lowering the mechanical properties below a desired level. On the other hand, heating at higher than the upper limit has a negative influence on the heat-susceptible support substrate, degrading the physical properties of the plastic film.

The photocuring may be performed prior to the thermosetting, or vice versa. Preferably, the photocuring is carried out, ahead of the thermosetting, to afford high-hardness plastic films with improved processability.

According to the method for preparing a plastic film of the present invention, the coating layer may include an interpenetrating polymer network (IPN) structure.

Herein, the 'IPN structure' means the co-existence of two or more crosslinked structures within the coating layer, as exemplified by first and second crosslinked structures constructed by the photocuring and the thermosetting, respectively. The plastic film of the present invention may have an IPN structure in which two or more crosslinked structures are entangled with each other within the coating layer.

In the present invention, the IPN structure may be constructed by subjecting a coating composition containing both an acrylate-based monomer having a photocurable functional group, and a thermosetting prepolymer composition to photocuring and thermosetting reactions. That is, photocuring and thermosetting are sequentially conducted on the coating composition and both the tri- to hexafunctional acrylate-based monomer and the thermosetting prepolymer composition to allow the photocured and thermoset moieties to be crosslinked to each other. Hence, the coating layer of the present invention contains an IPN structure comprising both a first crosslinked structure induced by photocuring the tri- to hexafunctional acrylate-based monomers; and a second crosslinked structure induced by thermosetting the thermosetting prepolymer composition.

Exhibiting excellent physical properties including hardness, impact resistance, scratch resistance, transparency, durability, light resistance, and light transmittance, the plastic film of the present invention has useful applications in various fields.

In the method of the present invention, the coating layer is formed only on one side or both sides of the support substrate.

When the coating layer is formed on both sides, the coating composition may be applied onto the front and back sides of the support substrate in a sequential or simultaneous manner.

According to one embodiment of the present invention, a first coating composition is applied to one side of the support substrate, and photocured and thermoset, after which a second coating composition is subsequently applied to the other side of the support substrate, and then photocured and thermoset. In this context, the first and the second coating compositions are the same as the coating composition and are just terminologically discriminated for application to opposite respective sides of the substrate.

In the present invention, the curing of the thermosetting prepolymer composition under heat can compensate for the insufficient photocouring which might occur, thereby reinforcing the hardness and physical properties of the coating layer. In addition, the IPN comprising the first crosslinked structure constructed by photocuring the tri- to hexafunctional acrylate-based monomers and the second crosslinked structure constructed by thermosetting the thermosetting prepolymer composition guarantees the film has both high hardness and processability.

In one embodiment of the present invention, when a plastic film piece with dimensions of 10 cm x 10 cm, obtained by applying the coating composition to one side of the support substrate, and curing under light and heat, is placed on a flat plane, a maximal distance at which each edge of the piece is apart from the plane may be 3 cm or less, or 2.5 cm or less, or 2.0 cm or less.

In one embodiment of the present invention, when the plastic film fabricated with the coating composition is disposed on a plane after exposure to a temperature of 50ºC or higher at a humidity of 80% or higher for 70 hrs, the maximum distance at which each edge or side of the coating film is spaced apart from the plane may be approximately 1.0 mm or less, approximately 0.6 mm or less, or approximately 0.3 mm or less. More particularly, when the plastic film of the present invention is disposed on a plane after exposure to a temperature of 50ºC to 90ºC at a humidity of 80% to 90 % for 70 to 100 hrs, each edge or side of the plastic film is spaced apart from the plane by approximately 1.0 mm or less, approximately 0.6 mm or less, or approximately 0.3 mm or less, maximally.

Exhibiting excellent physical properties including hardness, scratch resistance, impact resistance, transparency, durability, light resistance, and light transmittance, the plastic film fabricated by the method of the present invention has useful applications in various fields.

For example, the plastic film fabricated according to the method of the present invention has a pencil hardness of 6H or more, 7H or more, or 8H or more at a load of 1 kg.

In addition, the plastic film fabricated by the method of the present invention exhibits superiority in terms of impact resistance, so that it can be used as a substitute for glass panels. For example, the plastic film of the present invention may not crack even after a steel bead weighing 22 g is freely dropped from a height of 40 cm thereto.

Further, after the plastic film fabricated by the method of the present invention is tested by double rubbing 400 times with a steel wool #0000 under a load of 500 g on a friction tester, only two or less scratches may appear.

The plastic film of the present invention may have a light transmittance of 92% or more, and a haze of 1.0% or less, 0.5% or less, or 0.4% or less.

Furthermore, the plastic film fabricated by the method of the present invention may have an initial color b* (b* defined by the CIE 1976 L*a*b* color space) of 1.0 or less. After the coating film is exposed to UV-B under an ultraviolet lamp for 72 hrs or more, it may have a color b* value which differs from the pre-exposed color b* value by 0.5 or less, or by o.4 or less.

As described above, the plastic film of the present invention can be applied to various fields. For example, the plastic film of the present invention can be used in touch panels of mobile terminals, smart phones or tablet PCs, and cover or device panels of various displays.

A better understanding of the present invention may be obtained through the following examples which are set forth to illustrate, but are not to be construed as limiting the present invention.

### <EXAMPLES>

### PREPARATION EXAMPLE 1: Preparation of Thermosetting Prepolymer Composition

To a jacket reactor were placed 50 g of methylethyl ketone and 50 g of cyclohexanone, and then 70 g of polyurethane Estane 5701^{®} (Noveon, polyurethane containing Bronsted salt, number average molecular weight 40,000) was added to the reactor, followed by stirring for 2 hrs at 80°C.

Afterward, 14 g of polytetramethyleneetherglycol (Terathane 1000^{®}, Mw = 1000, Sigma Aldrich), 1.5 g of 1,4-butanediol, and 17 g of a polyester polyol resin (dispersed in n-butyl acetate, Desmophen 670BA^{®}, Bayer) were added to the reactor, and stirred at room temperature for 30 min. Subsequently, 124 g of a cyclic polyisocyanate (blocked with MEKO, Vestant B 1358A^{®}, Degusa), 0.3 g of dibutyltin dilaurate (DBTDL), and 1.2 g of Tego 410^{®} and 1.2 g of Tego 450^{®}, which are both fluidity improvers, were introduced into the reactor, followed by stirring to the homogeneity to afford a thermosetting prepolymer composition with the solid fraction composed of the polyester-based polyurethane oligomer, the polyole and the polyisocyanate amounting to approximately 70 %.

### EXAMPLE 1

A first coating composition was prepared by mixing 2.0 g of the thermosetting prepolymer composition of Preparation Example 1, 9 g of silica-dipentaerythritol hexaacrylate (DPHA) composite in which nano-silica with a diameter of 20 ∼ 30nm was dispersed by 40 weight % (silica 3.6g, DPHA 5.4g), 0.2 g of a photoinitiator (brand name: Darocur TPO), 0.1 g of a benzotriazole yellowing inhibitor (brand name: Tinuvin 400), and 0.05 g of a fluorine surfactant (brand name: FC4430). A second coating composition was also prepared in the same manner.

The first coating composition was applied to a PET support substrate 188 µm thick with a size of 15 cm x 20 cm, followed by subjecting to the composition to first photocuring by exposure to 280 ∼ 350 nm UV light from a black light fluorescence lamp and then to thermosetting at 130ºC for 30 min to form a first coating layer.

Subsequently, the second coating composition was applied to the back side of the support substrate, and then exposed to 280 ∼ 350 nm UV light from a black light fluorescence lamp and then to heat at 130ºC for 30 min to form a second coating layer. After completion of the curing, each of the coating layers formed on both sides of the substrate was 100 µm thick.

### EXAMPLE 2

A plastic film was fabricated in the same manner as in Example 1, with the exception that the thermosetting prepolymer composition of Preparation Example 1 was used in an amount of 2.0 g, instead of 3.6 g.

### EXAMPLE 3

A plastic film was fabricated in the same manner as in Example 1, with the exception that 9 g of the silica-trimethylolpropane triacrylate (TMPTA) composite in which nano-silica with a size of 20 ∼ 30 nm was dispersed by 40 weight % (silica 3.6g, TMPTA 5.4g) was used, instead of 9 g of the silica-DPHA composite.

### EXAMPLE 4

A plastic film was fabricated in the same manner as in Example 1, with the exception that the thermosetting prepolymer composition of Preparation Example 1 was used in an amount of 0.7 g, instead of 2.0 g.

### EXAMPLE 5

A plastic film was fabricated in the same manner as in Example 1, with the exception that the thermosetting prepolymer composition of Preparation Example 1 was used in an amount of 9.0 g, instead of 2.0 g.

### COMPARATIVE EXAMPLE 1

A plastic film was fabricated in the same manner as in Example 1, with the exception that the silica-DPHA composite was used in an amount of 10 g (silica 4g, DPHA 6 g), instead of 9 g, and that the thermosetting prepolymer composition of Preparation Example 1 was not used.

### COMPARATIVE EXAMPLE 2

A plastic film was fabricated in the same manner as in Example 1, with the exception that the thermosetting prepolymer composition of Preparation Example 1 was used in an amount of 25.0 g, instead of 2.0 g.

Main components of the compositions used in Examples 1 to 5 and Comparative Examples 1 and 2 are summarized in Table 1, below.

**TABLE 1**

| Ex. No | Kind and Content of Tri- to hexafunctional acrylate-based monomer (Unit: g) | Silica (Unit: g) | Thermosetting prepolymer composition (Unit: g) |
|---|---|---|---|
| Example 1 | DPHA, 5.4 | 3.6 | 2.0 (solid content 1.4g) |
| Example 2 | DPHA, 5.4 | 3.6 | 3.6(solid content 2.5g) |
| Example 3 | TMPTA, 5.4 | 3.6 | 2.0 (solid content 1.4g) |
| Example 4 | DPHA, 5.4 | 3.6 | 0.7 (solid content 0.5g) |
| Example 5 | DPHA, 5.4 | 3.6 | 9.0 (solid content 6.3g) |
| Comparative Example 1 | DPHA, 6 | 4 | - |
| Comparative Example 2 | DPHA, 5.4 | 3.6 | 25.0 (solid content 17.5g) |

### <TEST EXAMPLES>

### Measurement Methods

### 1) Pencil hardness

Pencil hardness was evaluated according to the Japanese Standard JIS K5400. In this regard, the plastic film was doubly rubbed three times with a pencil hardness meter under a load of 1.0 kg to determine the hardness at which no scratches appeared.

### 2) Scratch resistance

The plastic film was doubly rubbed 400 times with a steel wool (#0000) under a load of 0.5 kg in a friction tester, and scratches thus formed were counted. Evaluation was made of the scratch resistance of the films by marking O for two or less scratches, Δ for two to less than five scratches, and x for five or more scratches.

### 3) Light resistance

Differences in color b* value of the plastic films were measured before and after exposure to UVB from UV lamp for 72 hrs.

### 4) Transmittance and haze

The plastic film was measured for transmittance and haze using a spectrophotometer (brand name: COH-400))

### 5) Curl property

After the formation of the first coating layer, the plastic film was cut into a piece with dimensions of 10 cm x 10 cm and placed on a flat plane. A maximal distance at which each edge of the piece was apart from the plane was measured.

### 6) Cylindrical bending test

Each of the plastic films was wound on a cylindrical mandrel having a diameter of 3 cm. When the plastic film was not cracked, it was evaluated as OK. If the plastic film was cracked, it was evaluated as X.

### 7) Impact resistance

The impact resistance of each of the plastic films was evaluated by determining whether or not each of the plastic films was cracked when a 22g steel ball was freely dropped thereon from a height of 40 cm. Each of the plastic films was evaluated as OK when it was not cracked, and as X when cracked.

The results of the physical properties measured in each of the plastic films are summarized in Table 2, below.

**TABLE 2**

| | EX. 1 | EX. 2 | EX. 3 | EX. 4 | EX. 5 | C. EX. 1 | C. EX. 2 |
|---|---|---|---|---|---|---|---|
| Pencil hardness | 9H | 8H | 8H | 9H | 6H | 9H | 4H |
| Scratch resistance | ○ | ○ | ○ | ○ | ○ | ○ | Δ |
| Light resistance | 0.20 | 0.24 | 0.15 | 0.38 | 0.38 | 0.35 | 0.30 |
| Transmittance | 92.3 | 92.1 | 92.4 | 92.0 | 91.8 | 92.3 | 92.0 |
| Haze | 0.2 | 0.3 | 0.2 | 0.2 | 0.4 | 0.3 | 0.4 |
| Bending test | OK | OK | OK | OK | OK | X | OK |
| Curl property | 2.5cm | 1.5cm | 2.0cm | 3.0cm | 0.5cm | 4.5cm | 0.1cm |
| Impact resistance | OK | OK | OK | OK | OK | X | OK |

As shown in Table 2 above, all of the plastic films of Examples 1 to 5 were found to have good physical properties, particularly, to exhibit excellent processability in terms of curl and bending properties, in addition to high hardness.

## Claims

1. A method for preparing a plastic film, comprising:
applying a coating composition comprising a tri- to hexafunctional acrylate-based monomer, a thermosetting prepolymer composition, an inorganic fine particle, and a photoinitiator to at least one side of a support substrate; and
curing the coating composition applied to the support substrate with light and heat to form a coating layer,
wherein the tri- to hexafunctional acrylate-based monomer and the thermosetting prepolymer composition are used at a weight ratio of 1:0.1 to 1:1.2, as measured on the basis of solid components thereof,
wherein the plastic film has a pencil hardness of 6H or more at a load of 1 kg, evaluated according to the Japanese Standard JIS K5400.

2. The method of claim 1, wherein the curing is carried out with light and then with heat.

3. The method of claim 1, wherein the thermosetting prepolymer composition comprises a polyester-baed polyurethane oligomer, a polyol, and a polyisocyanate.

4. The method of claim 3, wherein the thermosetting prepolymer composition comprises the polyester-based polyurethane oligomer in an amount of 10 to 40 weight %, the polyol in an amount of 5 to 30 weight %, and the polyisocyanate in an amount of 50 to 80 weight %, based on a total weight of a solid fraction thereof.

5. The method of claim 3, wherein the polyester-based polyurethane oligomer has a number average molecular weight of 1,000 to 100,000 g/mol.

6. The method of claim 3, wherein the polyol is selected from the group consisting of polyethylene glycol polyol, polycaprolactone polyol, polyester polyol, polyether polyol, polyacryl polyol, polycarbonate polyoldiol, and a combination thereof.

7. The method of claim 3, wherein the polyisocyate is at least one selected from the group consisting of 1,4-tetramethylene diisocyanate, 1,6-hexamethylene diisocyanate, 1,4-cyclohexyl diisocyanate, isophorone diisocyanate, α,α-xylylene diisocyanate, 4,4'-diphenylmethane diisocyanate, 1,3-phenylene diisocyanate, toluene diisocyanate, and a di- or trimer thereof.

8. The method of claim 1, wherein the thermosetting prepolymer composition further comprises a catalyst selected from the consisting of dibutyltindilaurate (DBTDL), zinc octoate, iron acetyl acetonate, N,N-dimethyl ethanolamine, triethylene diamine, and a combination thereof.

9. The method of claim 1, wherein the tri- to hexafunctional acrylate-based monomer is selected from the group consisting of trimethylolpropane triacrylate (TMPTA), trimethylolpropane ethoxy triacrylate (TMPEOTA), glycerin-propoxylated triacrylate (GPTA), pentaerythritol tetraacrylate (PETA), dipentaerythritol hexaacrylate (DPHA) and a combination thereof.

10. The method of claim 1, wherein the inorganic fine particle has a diameter of 100 nm or less.

11. The method of claim 1, wherein the inorganic fine particle comprises at least one selected from the group consisting of a silica particle, an aluminum oxide particle, a titanium oxide particle, and a zinc oxide particle.

12. The method of claim 1, wherein the coating composition comprises the tri- to hexafunctional acrylate-based monomer in an amount of 40 to 80 weight parts, the thermosetting prepolymer composition in an amount of 5 to 50 weight parts, the photoinitiator in an amount of 0.2 to 5 weight parts, and the inorganic fine particle in an amount of 5 to 40 weight parts, based on 100 weight parts of a solid component including the tri- to hexafunctional acrylate-based monomer, the thermosetting prepolymer composition, the photoinitiator, and the inorganic fine particle.

13. The method of claim 1, wherein the curing with heat is carried out at a temperature of 60 to 140°C.

14. The method of claim 1, comprising:
applying a first coating composition comprising a tri- to hexafunctional acrylate-based monomer, a thermosetting prepolymer composition, an inorganic fine particle, and a photoinitiator to one side of a support substrate; and
curing the first coating composition applied to the support substrate with light and heat to form a coating layer;
applying a second coating composition comprising a tri- to hexafunctional acrylate-based monomer, a thermosetting prepolymer composition, an inorganic fine particle, and a photoinitiator to another side of a support substrate; and
curing the second coating composition applied to the support substrate with light and heat to form a coating layer.

## Patentansprüche

1. Verfahren zum Herstellen eines Kunststofffilms, umfassend:
Auftragen einer Beschichtungszusammensetzung, die ein Monomer auf Basis von tri- bis hexafunktionellem Acrylat, eine wärmehärtende Präpolymerzusammensetzung, ein anorganisches Feinteilchen und einen Fotoinitiator umfasst, auf wenigstens eine Seite eines Trägersubstrats; und
Härten der Beschichtungszusammensetzung, die auf das Trägersubstrat aufgetragen ist, mit Licht und Wärme, um eine Beschichtungsschicht zu bilden,
wobei das Monomer auf Basis von tri- bis hexafunktionellem Acrylat und die wärmehärtende Präpolymerzusammensetzung in einem Gewichtsverhältnis von 1:0,1 bis 1:1,2 verwendet werden, wie gemessen auf der Basis der festen Komponenten derselben,
wobei der Kunststofffilm eine Bleistifthärte von 6H oder höher bei einer Last von 1 kg aufweist, gemessen gemäß dem Japanischen Standard JIS K5400.

2. Verfahren nach Anspruch 1, wobei das Härten mit Licht und dann mit Wärme durchgeführt wird.

3. Verfahren nach Anspruch 1, wobei die wärmehärtende Präpolymerzusammensetzung ein Polyurethanoligomer auf Polyesterbasis, ein Polyol und ein Polyisocyanat umfasst.

4. Verfahren nach Anspruch 3, wobei die wärmehärtende Präpolymerzusammensetzung das Polyurethanoligomer auf Polyesterbasis in einer Menge von 10-40 Gew.-%, das Polyol in einer Menge von 5 bis 30 Gew.-% und das Polyisocyanat in einer Menge von 50 bis 80 Gew.-%, basierend auf einem Gesamtgewicht einer Feststofffraktion derselben, umfasst.

5. Verfahren nach Anspruch 3, wobei das Polyurethanoligomer auf Polyesterbasis ein Zahlenmittelmolekulargewicht von 1,000 bis 100,000 g/mol aufweist.

6. Verfahren nach Anspruch 3, wobei das Polyol ausgewählt wird aus der Gruppe bestehend aus Polyethylenglykolpolyol, Polycaprolactonpolyol, Polyesterpolyol, Polyetherpolyol, Polyacrylpolyol, Polycarbonatpolyoldiol und einer Kombination derselben.

7. Verfahren nach Anspruch 3, wobei das Polyisocyanat wenigstens eines ist, ausgewählt aus der Gruppe bestehend aus 1,4-Tetramethylendiisocyanat, 1,6-Hexamethylendiisocyanat, 1,4-Cyclohexyldiisocyanat, Isophorondiisocyanat, α,α-Xylylendiisocyanat, 4,4'-Diphenylmethandiisocyanat, 1,3-Phenylendiisocyanat, Toluoldiisocyanat und einem Di- oder Trimer derselben.

8. Verfahren nach Anspruch 1, wobei die wärmehärtende Präpolymerzusammensetzung ferner einen Katalysator umfasst, der ausgewählt ist aus der Gruppe bestehend aus Dibutylzinndilaurat (DBTDL), Zinkoctoat, Eisenacetylacetonat, N,N-Dimethylethanolamin, Triethylendiamin und einer Kombination derselben.

9. Verfahren nach Anspruch 1, wobei das Monomer auf Basis von tri- bis hexafunktionellem Acrylat ausgewählt ist aus der Gruppe bestehend aus Trimethylolpropantriacrylat (TMPTA), Trimethylolpropanethoxytriacrylat (TMPEOTA), Glycerin-propoxyliertem Triacrylat (GPTA), Pentaerythritoltetraacrylat (PETA), Dipentaerythritolhexaacrylat (DPHA) und einer Kombination derselben.

10. Verfahren nach Anspruch 1, wobei das anorganische Feinteilchen einen Durchmesser von 100 nm oder weniger aufweist.

11. Verfahren nach Anspruch 1, wobei das anorganische Feinteilchen wenigstens eines umfasst, ausgewählt aus der Gruppe bestehend aus einem Silicateilchen, einem Aluminiumoxidteilchen, einem Titanoxidteilchen und einem Zinkoxidteilchen.

12. Verfahren nach Anspruch 1, wobei die Beschichtungszusammensetzung das Monomer auf Basis von tri- bis hexafunktionellem Acrylat in einer Menge von 40 bis 80 Gewichtsteilen, die wärmehärtende Präpolymerzusammensetzung in einer Menge von 5 bis 50 Gewichtsteilen, den Photoinitiator in einer Menge von 0,2 bis 5 Gewichtsteilen und das anorganische Feinteilchen in einer Menge von 5 bis 40 Gewichtsteilen, basierend auf 100 Gewichtsteilen einer Feststoffkomponente einschließend das Monomer auf Basis von tri- bis hexafunktionellem Acrylat, die wärmehärtende Präpolymerzusammensetzung, den Photoinitiator und das anorganische Feinteilchen, umfasst.

13. Verfahren nach Anspruch 1, wobei das Härten mit Wärme bei einer Temperatur von 60 bis 140°C durchgeführt wird.

14. Verfahren nach Anspruch 1, umfassend:
Auftragen einer ersten Beschichtungszusammensetzung, die ein Monomer auf Basis von tri- bis hexafunktionellem Acrylat, eine wärmehärtende Präpolymerzusammensetzung, ein anorganisches Feinteilchen und einen Photoinitiator umfasst, auf einer Seite eines Trägersubstrats; und
Härten der ersten Beschichtungszusammensetzung, die auf das Trägersubstrat aufgetragen ist, mit Licht und Wärme, um eine Beschichtungsschicht zu bilden;
Auftragen einer zweiten Beschichtungszusammensetzung, die ein Monomer auf Basis von tri- bis hexafunktionellem Acrylat, eine wärmehärtende Präpolymerzusammensetzung, ein anorganisches Feinteilchen und einen Photoinitiator umfasst, auf eine andere Seite eines Trägersubstrats; und
Härten der zweiten Beschichtungszusammensetzung, die auf das Trägersubstrat aufgetragen ist, mit Licht und Wärme, um eine Beschichtungsschicht zu bilden.

## Revendications

1. Procédé de préparation d'un film plastique, consistant à :
appliquer une composition de revêtement comprenant un monomère à base d'acrylate tri- à hexa-fonctionnel, une composition de prépolymère thermodurcissable, une particule fine inorganique et un photoinitiateur sur au moins un côté d'un substrat de support ; et
durcir la composition de revêtement appliquée sur le substrat de support à l'aide de lumière et de chaleur pour former une couche de revêtement,
dans lequel le monomère à base d'acrylate tri- à hexa-fonctionnel et la composition de prépolymère thermodurcissable sont utilisés dans un rapport en poids compris entre 1:0,1 et 1:1,2, mesurés sur la base de leurs composants solides,
dans lequel le film plastique a une dureté au crayon égale ou supérieure à 6H à une charge de 1 kg, évaluée selon la norme japonaise JIS K5400.

2. Procédé selon la revendication 1, dans lequel le durcissement est effectué à l'aide de lumière, puis de chaleur.

3. Procédé selon la revendication 1, dans lequel la composition de prépolymère thermodurcissable comprend un oligomère de polyuréthane à base de polyester, un polyol et un polyisocyanate.

4. Procédé selon la revendication 3, dans lequel la composition de prépolymère thermodurcissable comprend l'oligomère de polyuréthane à base de polyester dans une quantité comprise entre 10 et 40 % en poids, le polyol dans une quantité comprise entre 5 et 30 % en poids et le polyisocyanate dans une quantité comprise entre 50 et 80 % en poids, sur la base du poids total d'une fraction solide de ces derniers.

5. Procédé selon la revendication 3, dans lequel l'oligomère de polyuréthane à base de polyester a un poids moléculaire moyen en nombre compris entre 1 000 et 100 000 g/mol.

6. Procédé selon la revendication 3, dans lequel le polyol est sélectionné dans le groupe constitué de polyol de polyéthylène glycol, polyol de polycarprolactone, polyol de polyester, polyol de polyéther, polyol de polyacryle et polyol de polycarbonate, et une combinaison de ces derniers.

7. Procédé selon la revendication 3, dans lequel le polyisocyanate est un ou plusieurs éléments sélectionnés dans le groupe constitué de diisocyanate de 1,4-tétraméthylène, diisocyanate de 1,6-hexaméthylène, diisocyanate de 1,4-cyclohexyle, diisocyanate d'isophorone, diisocyanate de a, α-xylylène, diisocyanate de 4,4'-diméthylméthane, diisocyanate de 1,3-phénylène, diisocyanate de toluène et un di- ou tri-mère de ces derniers.

8. Procédé selon la revendication 1, dans lequel la composition de prépolymère thermodurcissable comprend en outre un catalyseur sélectionné dans le groupe constitué de dilaurate de dibutylétain (DBTDL), octoate de zinc, acétonate d'acétyle de fer, N,N- éthanolamine diméthylique, triéthylènediamine, et une combinaison de ces derniers.

9. Procédé selon la revendication 1, dans lequel le monomère à base d'acrylate tri- à hexa-fonctionnel est sélectionné dans le groupe constitué de triacrylate de triméthylolpropane (TMPTA), triacrylate d'éthoxy de triméthylolpropane (TMPEOTA), triacrylate de glycérine propoxylé (GPTA), tétraacrylate de pentaérythritol (PETA), hexaacrylate de dipentaérythritol (DPHA), et une combinaison de ces derniers.

10. Procédé selon la revendication 1, dans lequel la particule fine inorganique a un diamètre égal ou inférieur à 100 nm.

11. Procédé selon la revendication 1, dans lequel la particule fine inorganique comprend un ou plusieurs éléments sélectionnés dans le groupe constitué d'une particule de silice, une particule d'oxyde d'aluminium, une particule d'oxyde de titane et une particule d'oxyde de zinc.

12. Procédé selon la revendication 1, dans lequel la composition de revêtement comprend le monomère à base d'acrylate tri- à hexa-fonctionnel dans une quantité comprise entre 40 et 80 parties en poids, la composition de prépolymère thermodurcissable dans une quantité comprise entre 5 et 50 parties en poids, le photoinitiateur dans une quantité comprise entre 0,2 et 5 parties en poids et la particule fine inorganique dans une quantité comprise entre 5 et 40 parties en poids, sur la base de 100 parties en poids d'un composant solide incluant le monomère à base d'acrylate tri- à hexa-fonctionnel, la composition de prépolymère thermodurcissable, le photoinitiateur et la particule fine inorganique.

13. Procédé selon la revendication 1, dans lequel le durcissement à l'aide de chaleur est effectué à une température de 60 à 140°C.

14. Procédé selon la revendication 1, consistant à :
appliquer une première composition de revêtement comprenant un monomère à base d'acrylate tri- à hexa-fonctionnel, une composition de prépolymère thermodurcissable, une particule fine inorganique et un photoinitiateur sur un côté d'un substrat de support ; et
durcir la première composition de revêtement appliquée sur le substrat de support à l'aide de lumière et de chaleur pour former une couche de revêtement ;
appliquer une deuxième composition de revêtement comprenant un monomère à base d'acrylate tri- à hexa-fonctionnel, une composition de prépolymère thermodurcissable, une particule fine inorganique et un photoinitiateur sur l'autre côté d'un substrat de support ; et
durcir la deuxième composition de revêtement appliquée sur le substrat de support à l'aide de lumière et de chaleur pour former une couche de revêtement.
